# EUROPEAN PATENT APPLICATION

(11) **EP 4 443 106 A1**
(43) Date of publication of application: **09.10.2024**
(21) Application number: 24156176.0
(22) Date of filing: 07.02.2024
(51) Int. Cl.: G01C 21/00, H04L 67/52

(54) **IMAGING SYSTEM, IMAGING METHOD, AND CARRIER MEANS**

(30) Priority: 01.03.2023 JP 2023031164
(71) Applicant: Ricoh Company, Ltd., Tokyo 143-8555 (JP)
(72) Inventor: Itoh, Izumi, Tokyo, 143-8555 (JP)
(74) Representative: Marks & Clerk LLP

(57) **Abstract**

An imaging system captures an image of an object to be imaged with a camera provided with a vehicle, the vehicle moving on a road in an imaging area. The imaging system includes a determination unit (304) to determine an approach route along which the vehicle enters the imaging area and an exit route along which the vehicle exits the imaging area, based on positioning information of the vehicle. The imaging system includes an imaging control unit (306) to control imaging of the object to be imaged by the camera, based on the approach route and the exit route.

## Description

### BACKGROUND

### Technical Field

Embodiments of the present disclosure relate to an imaging system, an imaging method, and a carrier means.

### Related Art

An imaging system is known in which a camera mounted on a vehicle images an object to be imaged while the vehicle travels on a road in an imaging area. For example, technologies according to which a camera mounted on a vehicle images a road surface while the vehicle is traveling on the road are known in the art (for example, see Japanese Unexamined Patent Application Publication No. 2014-086826).

Further, some technologies are known in the art to display, on a map, identification information of a road regarding a damaged location on the road or information such as kilometer markers using latitude and longitude information (for example, see Japanese Unexamined Patent Application Publication No. 2006-112127).

For an imaging system in which a camera mounted on a vehicle images an object to be imaged while the vehicle travels on a road in an imaging area, there is a need to automate an imaging operation for cost reduction. Neither Japanese Unexamined Patent Application Publication No. 2014-086826 nor Japanese Unexamined Patent Application Publication No. 2006-112127 discloses automation of imaging.

### SUMMARY

In view of the above situation, an object of an embodiment of the present invention is to automate an imaging operation in an imaging system in which a camera mounted on a vehicle images an object to be imaged while the vehicle travels on a road in an imaging area.

An embodiment of the present disclosure includes an imaging system for capturing an image of an object to be imaged with a camera provided with a vehicle, the vehicle moving on a road in an imaging area. The imaging system includes a determination unit to determine an approach route along which the vehicle enters the imaging area and an exit route along which the vehicle exits the imaging area, based on positioning information of the vehicle. The imaging system includes an imaging control unit to control imaging of the object to be imaged by the camera, based on the approach route and the exit route.

An embodiment of the present disclosure includes an imaging method performed by a computer that controls a camera mounted on a vehicle to capture an image of an object to be imaged while the vehicle moves on a road in an imaging area. The method includes determining an approach route along which the vehicle enters the imaging area and an exit route along which the vehicle exits the imaging area, based on positioning information of the vehicle. The method includes controlling imaging of the object to be imaged by the camera, based on the approach route and the exit route.

An embodiment of the present disclosure includes a carrier means carrying computer readable codes which, when executed by a computer, cause the computer to carry out the above imaging method.

According to an embodiment of the present invention, an imaging operation is automated in an imaging system in which a camera mounted on a vehicle images an object to be imaged while the vehicle travels on a road in an imaging area.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a diagram illustrating a system configuration of an imaging system, according to an embodiment of the present disclosure;
FIG. 2 is a block diagram illustrating a hardware configuration of a computer, according to an embodiment of the present disclosure;
FIG. 3 is a block diagram illustrating a functional configuration of an imaging system, according to an embodiment of the present disclosure;
FIG. 4 is a flowchart of an imaging process, according to an embodiment of the present disclosure;
FIG. 5 is a diagram illustrating imaging area information, according to an embodiment of the present disclosure;
FIG. 6 is another diagram illustrating imaging area information, according to an embodiment of the present disclosure;
FIG. 7 is a diagram illustrating a display screen of a route scheduled to be imaged, according to an embodiment of the present disclosure;
FIG. 8 is a flowchart of the imaging process of an imaging target, according to Embodiment 1 of the present disclosure;
FIG. 9 is a diagram illustrating an imaging-in-progress display screen, according to an embodiment of the present disclosure;
FIG. 10 is a diagram illustrating a display screen of an imaging result, according to an embodiment of the present disclosure;
FIG. 11 is another diagram illustrating a display screen of an imaging result, according to an embodiment of the present disclosure;
FIG. 12 is a diagram illustrating how multiple pieces of captured image data are connected to one another in accordance with the movement direction of a vehicle, according to an embodiment of the present disclosure; and
FIG. 13 is a flowchart of the imaging process of an imaging target, according to Embodiment 2 of the present disclosure.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Embodiments of the present disclosure are described below with reference to the drawings.

### System Configuration

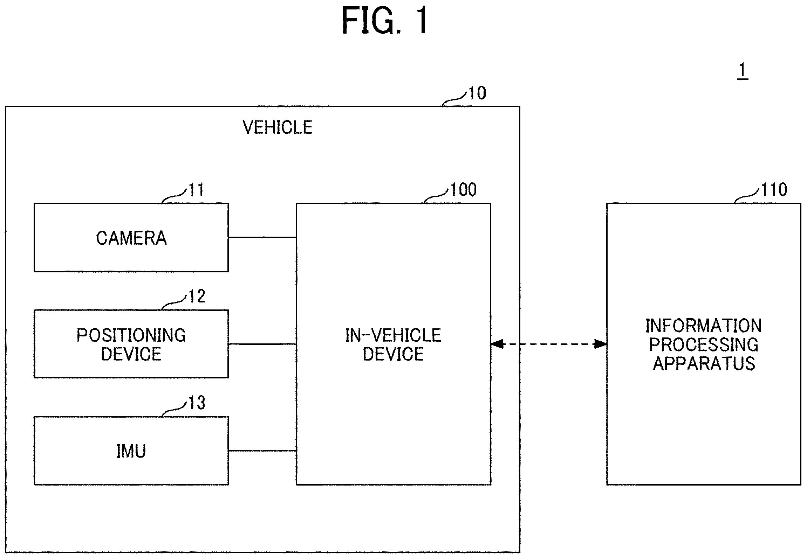

FIG. 1 is a diagram illustrating a system configuration of an imaging system 1 according to an embodiment of the present disclosure. The imaging system 1 includes a vehicle 10, a camera 11, a positioning device 12, an inertial measurement unit (IMU) 13, an in-vehicle device 100, and an information processing apparatus 110 that can communicate with the in-vehicle device 100. The camera 11 is mounted on the vehicle 10. Examples of the vehicle include an automobile. The information processing apparatus 110 may be mounted on the vehicle 10 or may be provided external to the vehicle 10. The functions of the information processing apparatus 110 may be included in the in-vehicle device 100.

In the imaging system 1, the camera 11 mounted on the vehicle 10 captures an image of an object to be imaged while the vehicle 10 travels on a road in an imaging area. In the following description, the object to be imaged may be referred to as an "imaging target." For example, the imaging system 1 images the surface of a road while traveling on the road with the surface of the road set as the imaging target. In the following description, the surface of the road may be referred to as a "road surface." By so doing, the imaging system 1 inspects the state of the road surface such as cracking or rutting.

The road surface serves as the imaging target according to an embodiment of the present disclosure. The imaging target is not limited to the road surface. Other examples of the imaging target include various structures near a road, such as a guardrail, a guard pipe, a road sign, a curve mirror, a utility pole, or the inner surface of a tunnel. Alternatively, the imaging system 1 may capture one or more images of one or more imaging targets while traveling on a road to inspect one or more imaging targets using the captured one or more images. The following description is given on the assumption that the imaging system 1 captures an image of a road surface as an imaging target while traveling on a road.

The camera 11 is an image capturing device that is mounted on the vehicle 10 and images the imaging target. For example, the camera 11 captures an image of the road surface under the control of the in-vehicle device 100 and outputs the captured image to the in-vehicle device 100.

The camera 11 may be one camera or multiple cameras depending on the imaging target. Alternatively, the camera 11 may be one or more cameras including multiple imaging elements. Still alternatively, the camera 11 may be a video camera, a digital camera, or a stereo camera that can acquire information on the depth direction of the captured image.

The camera 11 may capture a moving image of the imaging target or continuous still images of the imaging target. When the camera 11 captures still images continuously, it is preferable that the camera 11 capture multiple captured images so that the parts of the captured images overlap one another in accordance with the movement direction of the vehicle 10 at the time of image capturing.

The positioning device 12 outputs coordinate information indicating the location of the vehicle 10, for example, using a global navigation satellite system (GNSS). The IMU 13 is a unit that includes, for example, a three-axis angular velocity sensor and a three-axis acceleration sensor, and detects three-dimensional inertial motion.

The in-vehicle device 100 is a computer installed in the vehicle 10. The in-vehicle device 100 acquires positioning information indicating the current position of the vehicle 10 on the basis of, for example, coordinate information acquired from the positioning device 12 and sensor information acquired from the IMU 13. The in-vehicle device 100 determines an approach route through which the vehicle 10 enters the imaging area and an exit route through which the vehicle 10 exits the imaging area on the basis of the positioning information indicating the position of the vehicle 10. Further, the in-vehicle device 100 controls the imaging of the imaging target (e.g., a road surface) by the camera 11 on the basis of the determined approach route and exit route.

The in-vehicle device 100 may acquire, for example, position information and sensor information of the vehicle 10 managed by the vehicle 10, from, for example, an electronic control unit (ECU) provided with the vehicle 10.

The information processing apparatus 110 generates imaging area information including an entry detection area and an exit detection area, and transmits the generated imaging area information to the in-vehicle device 100. The information processing apparatus 110 detects an object that enters a road in an imaging area to be imaged in the entry detection area. The information processing apparatus 110 detects an object that exits the road in the exit detection area. The information processing apparatus 110 acquires captured image data obtained by capturing an image of the road surface in the imaging area by the in-vehicle device 100 and stores the acquired captured image data.

### Overview of Process

The in-vehicle device 100 controls the camera 11 to start the image capturing of the imaging target when the vehicle 10 enters the entry detection area included in the imaging area information on the basis of the positioning information of the vehicle 10.

In the present disclosure, the entry detection area is, for example, an area within a first distance (e.g., about 10 to 20 meters) from the start point of the road in the imaging area.

Further, the in-vehicle device 100 controls the camera 11 to finish the image capturing of the imaging target when the vehicle 10 exits the imaging area through the exit detection area included in the imaging area information on the basis of the positioning information of the vehicle 10. In the present disclosure, the exit detection area is, for example, an area within a second distance (e.g., about 10 to 20 meters) from the endpoint of the road in the imaging area.

Preferably, the in-vehicle device 100 stops or disables the image capturing of the imaging target by the camera 11 when the vehicle 10 exits the imaging area from a position other than the exit detection area after entering the entry detection area.

According to the present embodiment, with the above-described process, an imaging operation is automated in the imaging system 1 in which the camera 11 mounted on the vehicle 10 captures an image of the imaging target while the vehicle 10 travels on the road in the imaging area.

### Hardware Configuration

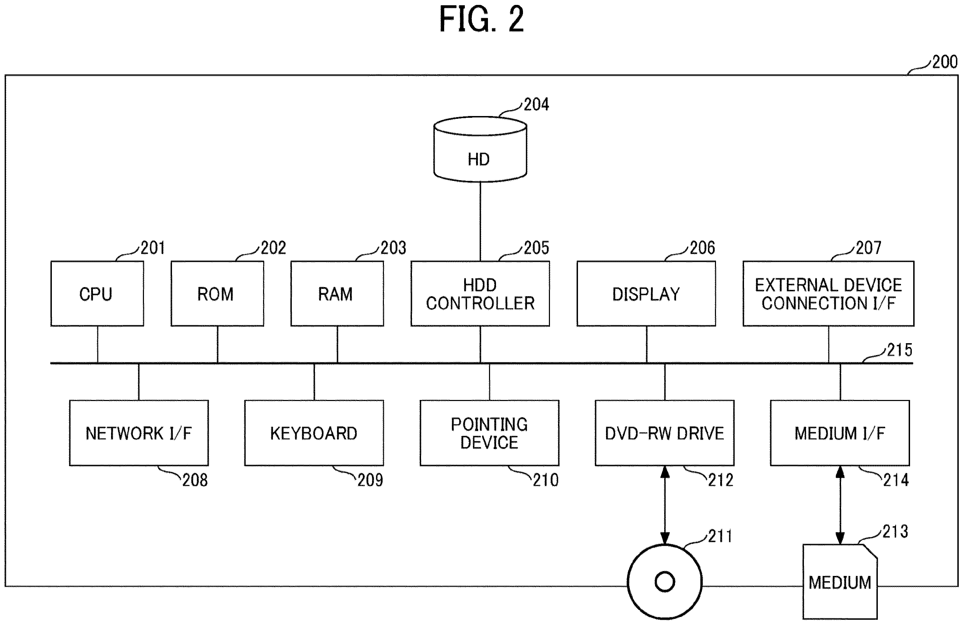

The in-vehicle device 100 and the information processing apparatus 110 have hardware configurations of a computer 200 as illustrated in FIG. 2, for example. The information processing apparatus 110 may be implemented by multiple computers 200.

FIG. 2 is a block diagram illustrating a hardware configuration of the computer 200, according to an embodiment of the present disclosure. As illustrated in FIG. 2, the computer 200 includes, for example, a central processing unit (CPU) 201, a read-only memory (ROM) 202, a random-access memory (RAM) 203, a hard disk (HD) 204, a hard disk drive (HDD) controller 205, a display 206, an external device connection interface (I/F) 207, a network I/F 208, a keyboard 209, a pointing device 210, a digital versatile disc rewritable (DVD-RW) drive 212, a medium I/F 214, and a bus line 215.

The CPU 201 executes a predetermined program to control the overall operation of the computer 200. The ROM 202 stores, for example, a program and data used to boot or start the computer 200, such as a start-up file. The RAM 203 is used as, for example, a work area for the CPU 201. The HD 204 stores, for example, various data and programs such as an operating system (OS), an application, and a device driver. The HDD controller 205 controls, for example, the reading or writing of various data to and from the HD 204 under the control of the CPU 201. The HD 204 and the HDD controller 205 are storage devices according to an embodiment of the present disclosure.

The display 206 displays various information such as a cursor, a menu, a window, a character, or an image. The display 206 may be external to the computer 200. The external device connection I/F 207 is an interface that connects various external devices including the camera 11, the positioning device 12, and the IMU 13 to the computer 200. The network I/F 208 is an interface for wired or wireless communication with another computer.

The keyboard 209 serves as input means provided with multiple keys used for, for example, inputting characters, numerical values, and various instructions. The pointing device 210 serves as input means used for, for example, selecting or executing various instructions, selecting an item to be processed, and moving a cursor being displayed. The keyboard 209 and the pointing device 210 may be external to the computer 200.

The DVD-RW drive 212 controls the reading and writing of various data from and to a DVD-RW 211, which serves as a removable storage medium. The DVD-RW 211 is not limited to a DVD-RW and may be another removable storage medium. The medium I/F 214 controls the reading and writing (storing) of data from and to a storage medium 213 such as a flash memory. The bus line 215 includes an address bus, a data bus, and various control signals. The bus line 215 electrically connects the above-described hardware components to one another.

The configuration of the computer 200 illustrated in FIG. 2 is given by way of example. The computer 200 may have any other suitable configuration, provided that the computer includes the CPU 201, the ROM 202, the RAM 203, and the network I/F 208.

### Functional Configuration

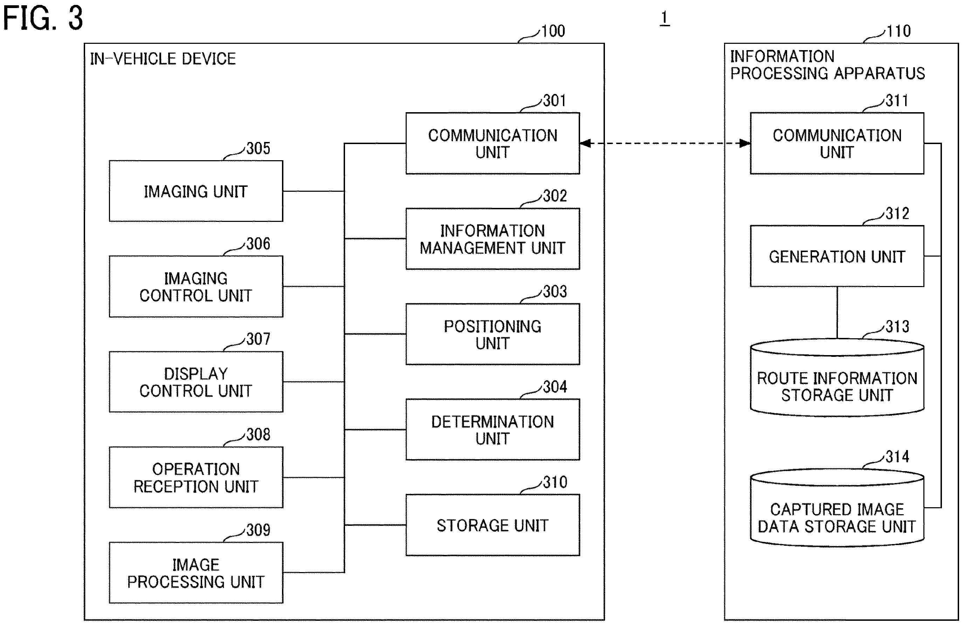

FIG. 3 is a block diagram illustrating a functional configuration of the imaging system 1 according to an embodiment of the present disclosure.

### Functional Configuration of In-Vehicle Device

The in-vehicle device 100 includes a communication unit 301, an information management unit 302, a positioning unit 303, a determination unit 304, an imaging unit 305, an imaging control unit 306, a display control unit 307, an operation reception unit 308, and an image processing unit 309, which are implemented by the CPU 201 executing a program stored in the storage medium. In some embodiments, at least a part of the functional units may be implemented by hardware.

The in-vehicle device 100 further includes a storage unit 310, which is implemented by, for example, a storage device such as the HD 204 and the HDD controller 205, and a program executed by the CPU 201.

The communication unit 301 connects the in-vehicle device 100 to a communication network using, for example, the network I/F 208 and performs communication processing of communicating with the information processing apparatus 110. Further, the communication unit 301 may connect the in-vehicle device 100 to an in-vehicle network of the vehicle 10 and further communicate with various ECUs of the vehicle 10.

The information management unit 302 acquires imaging area information received by the communication unit 301 from the information processing apparatus 110 and stores the acquired imaging area information in the storage unit 310 to manage the imaging area information.

The positioning unit 303 performs positioning processing to determine the location of the vehicle 10 using, for example, the positioning device 12 and the IMU 13. For example, the positioning unit 303 calculates positioning information indicating the location of the vehicle 10 using coordinate information indicating the location of the vehicle 10 that is output by the positioning device 12 and sensor information that is output by the IMU 13. The positioning unit 303 may calculate the positioning information of the vehicle 10 further using, for example, traveling data acquired from the ECU of the vehicle 10.

Alternatively, the in-vehicle device 100 may acquire the positioning information of the vehicle 10 managed by the vehicle 10 from the ECU of the vehicle 10.

The determination unit 304 determines an approach route through which the vehicle 10 enters the imaging area and an exit route through which the vehicle 10 exits the imaging area on the basis of positioning information indicating the location of the vehicle 10. In the following description, the positioning information indicating the location of the vehicle 10 may be referred to as "positioning information of the vehicle 10."

For example, the imaging area information managed by the information management unit 302 includes the entry detection area and the exit detection area, as described above. An object that enters the road in the imaging area is detected in the entry detection area. An object that exits the road is detected in the exit detection area. The determination unit 304 determines, for example, that the vehicle 10 enters the entry detection area, that the vehicle 10 exits the exit detection area, and that the vehicle 10 exits the imaging area from an area other than the exit detection area on the basis of the positioning information of the vehicle 10.

The imaging unit 305 performs imaging processing to capture an image of an imaging target using the camera 11. The imaging control unit 306 performs imaging control processing of controlling capturing an image of the imaging target by the camera 11 on the basis of the approach route and the exit route determined by the determination unit 304. The imaging unit 305 may be included in the imaging control unit 306.

For example, the imaging control unit 306 starts capturing an image of the imaging target by the camera 11 when the vehicle 10 enters the imaging area from a predetermined entry detection area. Further, the imaging control unit 306 finishes capturing an image of the imaging target by the camera 11 in a case where the vehicle 10 exits the imaging area from a predetermined exit detection area while the image of the imaging target is being captured by the camera 11. Furthermore, the imaging control unit 306 stops or disables capturing an image of the imaging target by the camera 11, for example, in a case where the vehicle 10 exits the imaging area from an area other than the predetermined exit detection area while the image of the imaging target is being captured by the camera 11.

The display control unit 307 performs display control processing of displaying various display screens, for example, on the display 206 or a display device provided for the vehicle 10. The operation reception unit 308 performs operation reception processing of receiving, for example, an input operation by a user on a display screen displayed by the display control unit 307. The image processing unit 309 performs various image processing on a captured image captured by the imaging unit 305 and the imaging control unit 306, for example. The storage unit 310 stores various information such as imaging area information, data, or a program.

### Functional Configuration of Information Processing Apparatus

The information processing apparatus 110 includes a communication unit 311 and a generation unit 312, which are implemented by the CPU 201 executing a program stored in the storage medium. In some embodiments, at least a part of the functional units may be implemented by hardware.

The information processing apparatus 110 further includes a route information storage unit 313 and a captured image data storage unit 314, which are implemented by, for example, a storage device such as the HD 204 and the HDD controller 205, and a program executed by the CPU 201. Alternatively, the route information storage unit 313 and the captured image data storage unit 314 may be implemented by a storage server, a cloud service, or a combination of these external to the information processing apparatus 110. Further, in a case where the information processing apparatus 110 is configured by multiple computers 200, the route information storage unit 313 and the captured image data storage unit 314 may be implemented respectively by the different computers 200.

The communication unit 311 connects the information processing apparatus 110 to a communication network using, for example, the network I/F 208 and performs communication processing of communicating with the in-vehicle device 100. For example, the communication unit 301 performs transmission processing of transmitting the imaging area information generated by the generation unit 312 to the in-vehicle device 100. Further, the communication unit 301 performs reception processing of storing the captured image data received from the in-vehicle device 100 in the captured image data storage unit 314.

The generation unit 312 performs generation processing of generating the imaging area information including the entry detection area and the exit detection area described on the basis of, for example, information on a route to be imaged and map information. The information on the route to be imaged may be input by a user or may be stored in advance in the route information storage unit 313. A detailed description is given later of the imaging area information generated by the generation unit 312, according to an embodiment of the present disclosure.

The route information storage unit 313 stores information needed for the generation unit 312 to generate the imaging area information such as the information on a route to be imaged and the map information. The captured image data storage unit 314 stores the captured imaged data received by the communication unit 311, for example, from the in-vehicle device 100.

The functional configuration of the imaging system 1 illustrated in FIG. 3 is an example. For example, in FIG. 3, the in-vehicle device 100 may include at least a part of the functional units of the information processing apparatus 110. Further, the information processing apparatus 110 may include at least a part of the functional units of the in-vehicle device 100. Furthermore, at least a part of the functional units of the imaging system 1 may use a function provided by, for example, an external cloud service.

### Operation

A description is now given of a processing flow of an imaging method, according to the present embodiment.

### Imaging Process

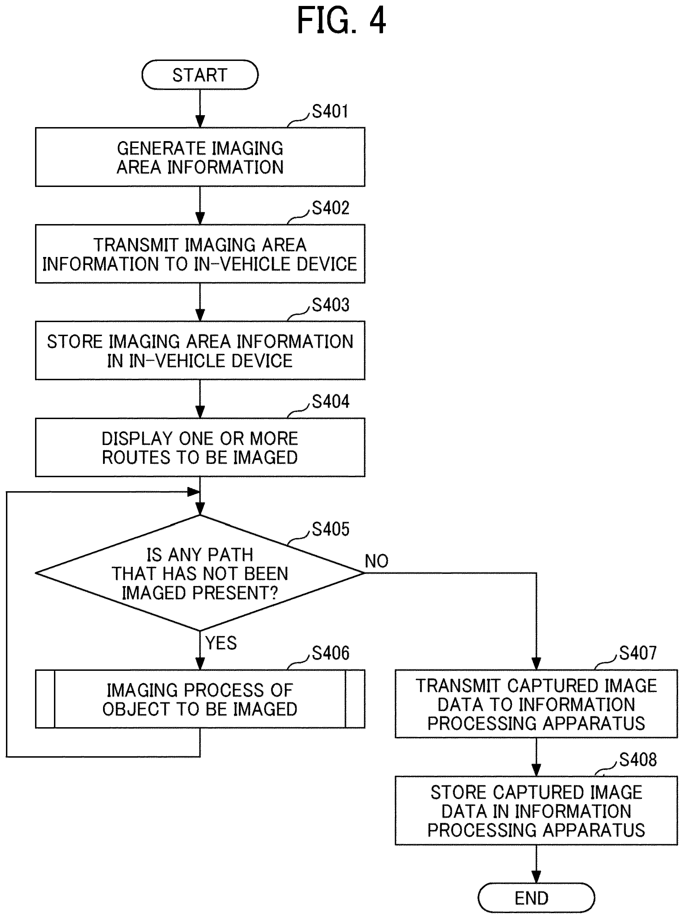

FIG. 4 is a flowchart of an imaging process, according to an embodiment of the present disclosure. This process presents an overall flow of the imaging process performed by the imaging system 1.

In step S401, the generation unit 312 generates imaging area information including an entry detection area and an exit detection area. An object that enters a road in an imaging area to be imaged is detected in the entry detection area. An object that exits from the road is detected in the exit detection area.

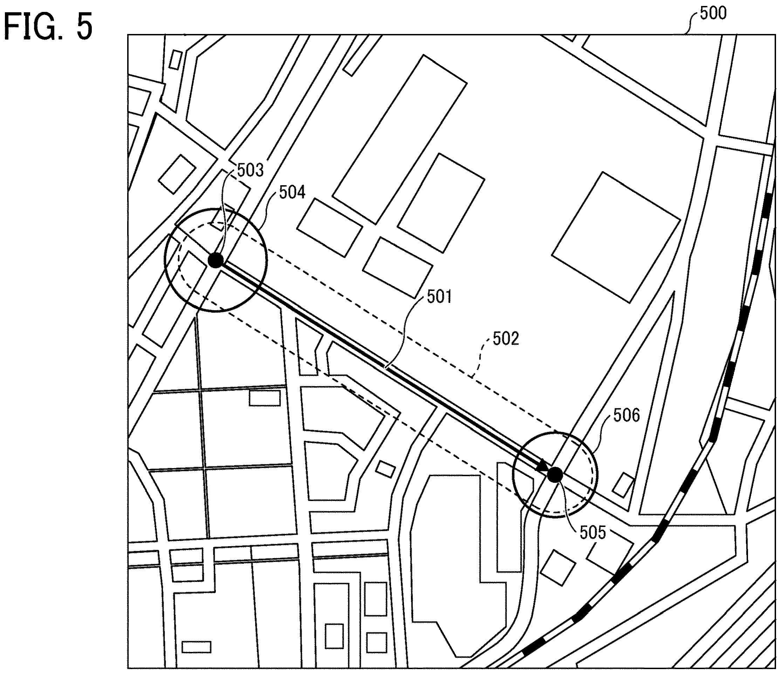

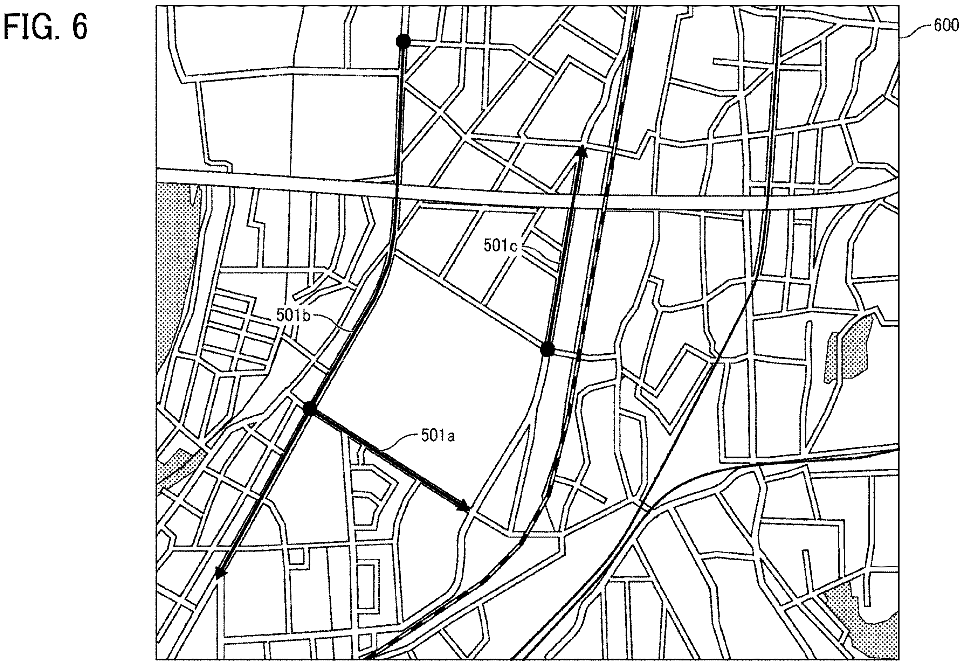

FIG. 5 and FIG. 6 are diagrams each illustrating the imaging area information, according to an embodiment of the present disclosure. The imaging area information includes, for example, information such as a route 501, a route detection area 502, an entry detection area 504, and an exit detection area 506.

The route 501 is represented by, for example, a road to be imaged and an arrow indicating a movement direction on a map 500. Further, the route 501 is configured by, for example, multiple points indicating latitudes and longitudes and a straight line connecting adjacent points. For example, information on the route 501 to be imaged is stored in advance in the route information storage unit 313. Alternatively, the information processing apparatus 110 may store the road to be imaged and the movement direction that are input according to an input operation by a user in the route information storage unit 313 as the route 501.

The route detection area 502 is, for example, an area within a range of a predetermined distance from the route 501. For example, the generation unit 312 generates the route detection area 502 by setting an expected positioning error (e.g., about 10 to 30 meters) as the predetermined distance.

The entry detection area 504 is, for example, an area within a range of a first distance from a start point 503 of the route 501 (i.e., the start point of a road in the imaging area). For example, the generation unit 312 determines the first distance on the basis of an expected positioning error and an amount of delay in positioning determination and sets an area within a range of the first distance from the start point 503 of the route 501 as the entry detection area 504. As a specific example, when the positioning error is 10 meters and the amount of delay in positioning determination is 3 meters (= response delay 0.2 seconds traveling speed 50 km/h) meters, the generation unit 312 may set an area within 13 meters from the start point 503 of the route 501 as the entry detection area 504. Alternatively, the generation unit 312 may add a margin to set the first distance to a value equal to or larger than 13 meters.

The exit detection area 506 is, for example, an area within a range of a second distance from an endpoint 505 of the route 501 (i.e., the endpoint of the road in the imaging area). For example, the generation unit 312 determines the second distance on the basis of an expected positioning error and an amount of delay in positioning determination and sets an area within a range of the second distance from the endpoint 505 of the route 501 as the exit detection area 506. The first distance and the second distance may be the same distance or different distances.

Further, the imaging area information generated by the generation unit 312 may include, for example, multiple routes 501a, 501b, and 501c as illustrated in FIG. 6. In this case, the generation unit 312 generates the route detection area 502, the entry detection area 504, and the exit detection area 506 described with reference to FIG. 5 for each of the routes 501a, 501b, and 501c.

Referring again to FIG. 4, the description of the flowchart is continued. In step S402, the generation unit 312 of the information processing apparatus 110 transmits the generated imaging area information to the in-vehicle device 100 using the communication unit 311.

In step S403, the information management unit 302 of the in-vehicle device 100 stores the imaging area information received by the communication unit 301 from the information processing apparatus 110 in the storage unit 310 of the in-vehicle device 100.

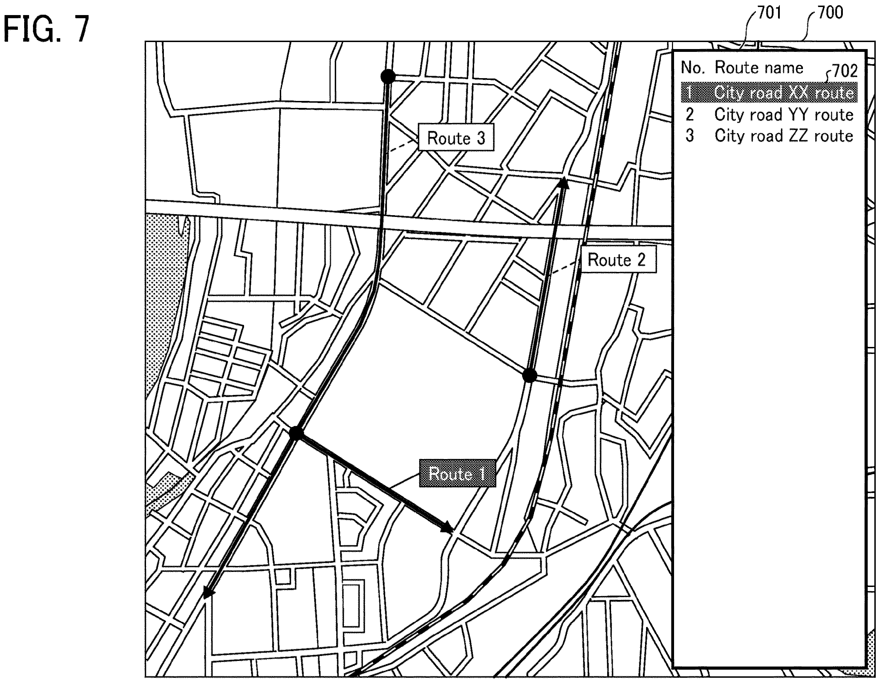

In step S404, the display control unit 307 of the in-vehicle device 100 displays one or more routes to be imaged on the display 206 or a display unit such as a display provided for the vehicle 10. For example, the display control unit 307 displays a display screen 700 as illustrated in FIG. 7 on the display unit.

FIG. 7 is a diagram illustrating the display screen 700 of a route scheduled to be imaged, according to an embodiment of the present disclosure. In FIG. 7, the display control unit 307 displays, for example, the multiple routes 501a, 501b, and 501c described with reference to FIG. 6 as lines 1, 2, and 3, respectively, on the display screen 700 of the route scheduled to be imaged. The display control unit 307 does not display, for example, the route detection area 502, the entry detection area 504, and the exit detection area 506 described with reference to FIG. 5 on the display screen 700 of the route scheduled to be imaged.

Preferably, the display control unit 307 displays a list 701 of route names on the display screen 700 of the route scheduled to be imaged, and highlights a route 702, which is selected from the list, to notify a user of the association between the route name in the list and the route displayed on the map. FIG. 7 illustrates a case where the display control unit 307 displays the selected route 702 in reverse video. The highlighted display is not limited to the reverse video. The display control unit 307 may change the display color of the selected route 702 or may display a pop-up of text or image representing "Route 1."

Referring again to FIG. 4, the description of the flowchart is continued. In step S405, the imaging control unit 306 of the in-vehicle device 100 determines whether any route that has not been imaged is present from among one or more routes scheduled to be imaged. When any route that has not been imaged is present, the process by the imaging control unit 306 proceeds to step S406. By contrast, when no route that has not been imaged is present, the process by the imaging control unit 306 proceeds to step S407.

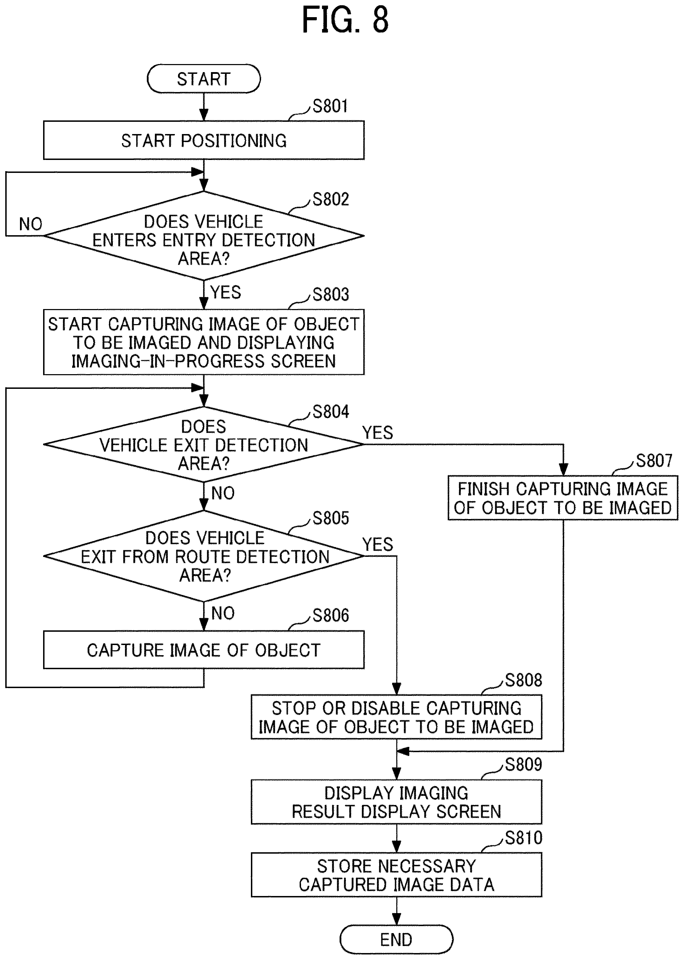

When the process proceeds to step S406, the imaging control unit 306 performs an imaging process of an imaging target as illustrated in FIG. 8, for example. By the processing in steps S405 and S406, the imaging control unit 306 performs the imaging process of the imaging target for each of one or more routes scheduled to be imaged.

By contrast, when the process proceeds from step S405 to step S407, the imaging control unit 306 transmits the captured image data obtained by imaging the imaging target in the imaging process to the information processing apparatus 110 via the communication unit 301.

In step S408, the communication unit 311 of the information processing apparatus 110 stores the captured image data received from the in-vehicle device 100 in the captured image data storage unit 314.

By the process of FIG. 4, the imaging system 1 can acquire the captured image data obtained by imaging the imaging target in one or more routes to be imaged.

### Imaging Process of Imaging Target

A description is now given of an imaging process of an imaging target performed by the in-vehicle device 100.

### Embodiment 1

FIG. 8 is a flowchart of the imaging process of an imaging target, according to Embodiment 1 of the present disclosure. This process is the imaging process of the imaging target performed by the in-vehicle device 100 in step S406 of FIG. 4, according to the present embodiment.

In step S801, the imaging control unit 306 of the in-vehicle device 100 controls the positioning unit 303 to start positioning. Accordingly, the positioning unit 303 starts the positioning process of tracking the position of the vehicle 10 at predetermined time intervals (e.g., about 0.1 seconds).

In step S802, the determination unit 304 of the in-vehicle device 100 determines whether the vehicle 10 enters the entry detection area 504 as illustrated in FIG. 5, for example, on the basis of the positioning information acquired by the positioning unit 303. When the vehicle 10 enters the entry detection area 504, the process by the determination unit 304 proceeds to step S803. By contrast, when the vehicle 10 does not enter the entry detection area 504, the determination unit 304 repeatedly performs the processing of step S802 until the vehicle 10 enters the entry detection area 504. The process of step S802 is a process in which the determination unit 304 determines an approach route along which the vehicle 10 enters the imaging area on the basis of the positioning information of the vehicle 10, according to an embodiment of the present disclosure.

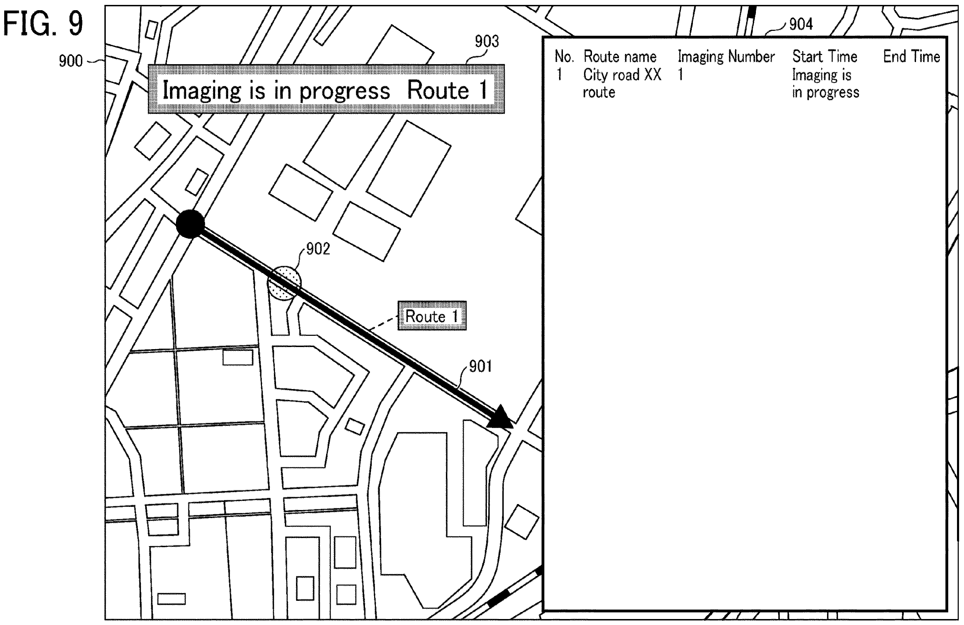

In step S803, the imaging control unit 306 controls the imaging unit 305 to start imaging the imaging target and controls the display control unit 307 to start displaying a display screen indicating that imaging is in progress. Accordingly, the display control unit 307 displays, for example, an imaging-in-progress display screen 900 as illustrated in FIG. 9 on, for example, the display 206 or a display unit such as a display provided for the vehicle 10.

FIG. 9 is a diagram illustrating the imaging-in-progress display screen 900 according to an embodiment of the present disclosure. For example, in FIG. 9, a route 901 indicating the route 1 that is being imaged, a display component 902 that displays the current position of the vehicle 10 in real time, a message 903 indicating that the route 1 is being imaged, and an imaged route list 904 are displayed on the imaging-in-progress display screen 900. The imaging-in-progress display screen 900 allows a driver who drives the vehicle 10 to easily recognize the route 901 of the route 1, the current position of the vehicle 10, and the fact that the route 1 is being imaged.

Further, the driver who drives the vehicle 10 can automatically start the imaging of the imaging target on the route 1 even when no fellow passenger is on the vehicle 10.

In step S804, the determination unit 304 determines whether the vehicle 10 exits the route detection area 502 from the exit detection area 506 illustrated in FIG. 5, for example, on the basis of the positioning information acquired by the positioning unit 303. When the vehicle 10 does not exit from the exit detection area 506, the process by the determination unit 304 proceeds to step S805. By contrast, when the vehicle 10 exits from the exit detection area 506, the process by the determination unit 304 proceeds to step S807.

When the process proceeds from step S804 to step S805, the determination unit 304 determines whether the vehicle 10 exits from the route detection area 502 illustrated in FIG. 5, for example, on the basis of the positioning information acquired by the positioning unit 303. In other words, the determination unit 304 determines whether the vehicle 10 exits the imaging area from an area other than the exit detection area 506. When the vehicle 10 does not exit from the route detection area 502, the process by the determination unit 304 proceeds to step S806. By contrast, when the vehicle 10 exits from the route detection area 502, the process by the determination unit 304 proceeds to step S808. The processes in steps S804 and S805 are processes in which the determination unit 304 determines an exit route along which the vehicle 10 exits the imaging area on the basis of the positioning information of the vehicle 10, according to an embodiment of the present disclosure.

By contrast, when the process proceeds from step S804 to step S807, the imaging control unit 306 finishes the imaging of the imaging target by the imaging unit 305, and the process proceeds to step S809.

When the process proceeds from step S805 to step S806, the imaging control unit 306 controls the imaging unit 305 to capture an image of the imaging target, and the process returns to step S804.

By contrast, when the process proceeds from step S805 to step S808, the imaging control unit 306 stops or disables the imaging of the imaging target by the imaging unit 305, and the process proceeds to step S809. In the present disclosure, stopping the imaging of the imaging target refers to stopping the imaging of the imaging target started in step S803 and discarding the captured image data that are already acquired. Further, disabling the imaging of the imaging target refers to stopping the imaging of the imaging target started in step S803 and adding information such as an invalid flag indicating that the captured image data that are already acquired are invalid to the captured image data.

In step S809, the imaging control unit 306 controls the display control unit 307 to display a display screen of an imaging result on the display 206 or a display unit such as a display provided for the vehicle 10.

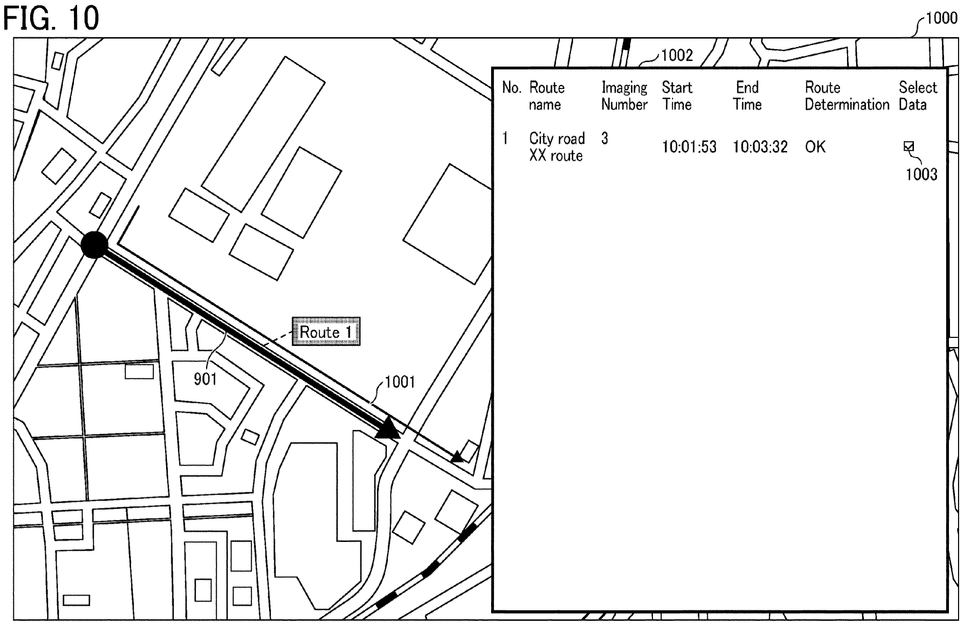

FIG. 10 is a diagram (1) illustrating an imaging result display screen 1000, according to an embodiment of the present disclosure. FIG. 10 illustrates the display screen of the imaging result displayed by the display control unit 307 in step S809 of FIG. 8, for example, according to an embodiment of the present disclosure. FIG. 10 illustrates a case where a route 901 indicating the route 1 and an imaging result 1001 indicating a route on which the imaging target is imaged are displayed on the imaging result display screen 1000.

Further, items such as "Start time," "End time," "Route determination," and "Select data" corresponding to the imaging result 1001 are displayed in an imaged route list 1002. The "start time" is information indicating the time when the imaging of the imaging result 1001 is started. The "end time" is information indicating the time when the imaging of the imaging result 1001 is completed. The "route determination" is information indicating whether the imaging result 1001 is valid captured image data or invalid captured image data. The "select data" is a selection field 1003 for selecting, for example, whether to transmit the imaging result 1001 to the information processing apparatus 110.

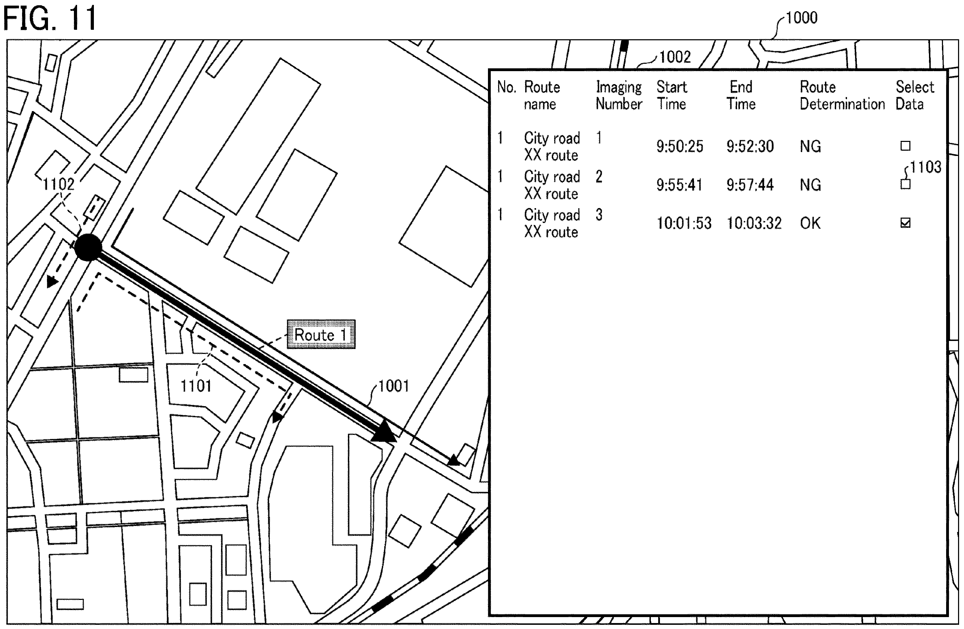

FIG. 11 is a diagram (2) illustrating the imaging result display screen 1000, according to an embodiment of the present disclosure. FIG. 11 illustrates another example of the display screen of the imaging result displayed by the display control unit 307 in step S809 of FIG. 8, for example, according to an embodiment of the present disclosure. FIG. 11 illustrates a case where an imaging result 1101 and an imaging result 1102 in which the imaging of the imaging target object is disabled are displayed on the imaging result display screen 1000 in addition to the imaging result 1001 indicating the route on which the imaging target object is imaged. In this way, the display control unit 307 may display, for example, the imaging results 1101 and 1102 that are disabled in step S808 of FIG. 8 on the imaging result display screen 1000.

Further, the items such as "Start time," "End time," "Route determination," and "Select data" corresponding to the imaging result 1101 and the imaging result 1102 are displayed in the imaged route list 1002.

In the imaged route list 1002, the "route determination" corresponding to the imaging result 1101 and the imaging result 1102 that are disabled is "NG" indicating that the imaging result 1101 and the imaging result 1102 are invalid.

The selection field 1103 allows a user to select whether to save or delete the imaging result 1101 and the imaging result 1102 that are disabled.

Referring again to FIG. 8, the description of the flowchart is continued. In step S810, the imaging control unit 306 stores the necessary captured image data. For example, the imaging control unit 306 stores captured image data corresponding to the imaging result 1001 in which the check box in the selection field 1103 in the imaging result display screen 1000 as illustrated in FIG. 10 or the imaging result display screen 1100 as illustrated in FIG. 11 is ticked in the storage unit 310.

By the process of FIG. 8, the in-vehicle device 100 can automate an imaging operation in the imaging system 1 in which the camera 11 mounted on the vehicle 10 captures an image of the imaging target while the vehicle 10 travels on the road in the imaging area.

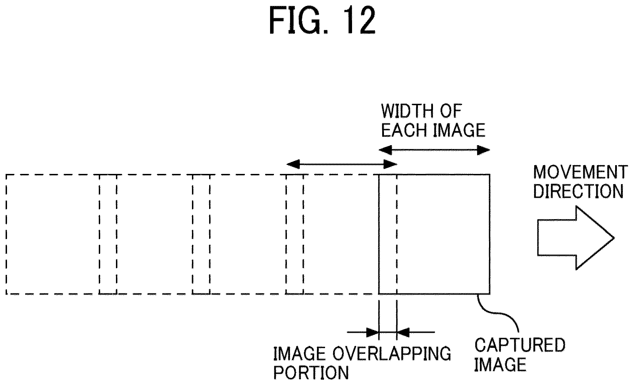

FIG. 12 is a diagram illustrating how multiple images are connected to one another in accordance with the movement direction of the vehicle 10 to create captured image data of the imaging target. When the in-vehicle device 100 captures an image of the imaging area as a still image, the imaging area cannot be covered in one-time imaging. In this case, for example, as illustrated in FIG. 12, it is preferable to create captured image data of the imaging target by connecting multiple captured images to one another in accordance with the movement direction of the vehicle 10 at the time of imaging. For example, when the vehicle 10 is traveling on the route 901 in the movement direction, the in-vehicle device 100 captures images of a predetermined range of the road surface with the camera 11 so that the parts of the images overlap with one another in the movement direction.

### Embodiment 2

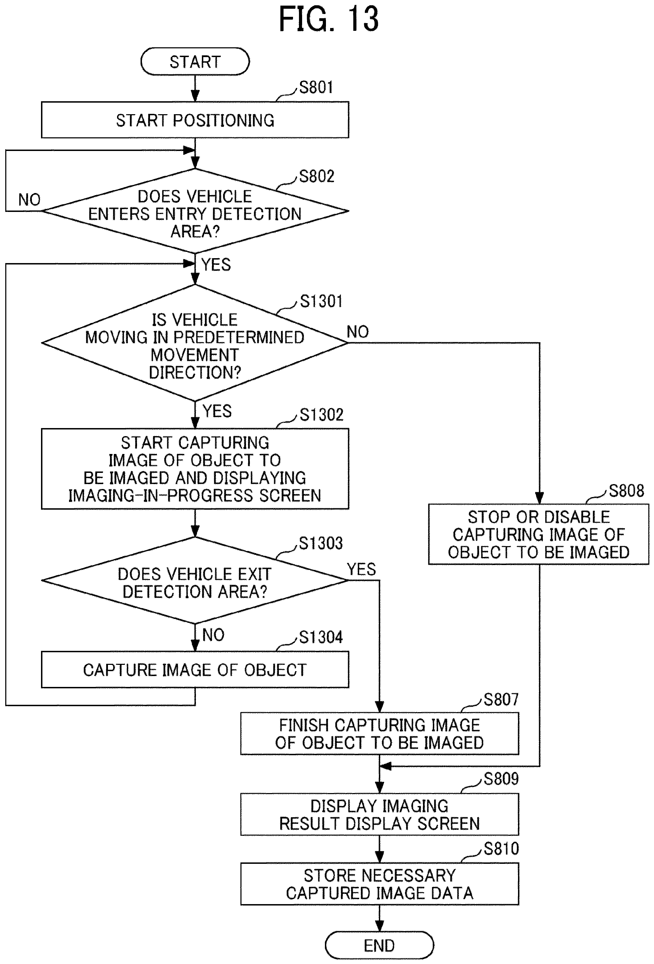

FIG. 13 is a flowchart of the imaging process of an imaging target, according to Embodiment 2 of the present disclosure. This process is another example of the imaging process of the imaging target performed by the in-vehicle device 100 in step S406 of FIG. 4, according to the present embodiment. In the process of FIG. 13, the processes of steps S801 to S802 and S807 to S810 are performed in the same or substantially the same manner as the imaging process of the imaging target according to Embodiment 1 described with reference to FIG. 8, and thus redundant descriptions thereof are omitted.

When the process proceeds from step S802 to step S1301, the determination unit 304 determines whether the vehicle 10 is moving in a predetermined movement direction on the basis of the positioning information acquired by the positioning unit 303. The predetermined movement direction corresponds to, for example, a direction indicated by arrow of the route 501 in FIG. 5. When the vehicle 10 is moving in the predetermined movement direction, the process by the determination unit 304 proceeds to step S1302. By contrast, when the vehicle 10 is not moving in the predetermined movement direction, the process by the determination unit 304 proceeds to step S808. The processes in steps S802 and S1301 are another set of examples of processes in which the determination unit 304 determines an exit route along which the vehicle 10 exits the imaging area on the basis of the positioning information of the vehicle 10, according to an embodiment of the present disclosure.

In step S1302, the imaging control unit 306 controls the imaging unit 305 to start imaging of the imaging target and controls the display control unit 307 to start displaying the display screen indicating that imaging is in progress.

In step S1303, the determination unit 304 determines whether the vehicle 10 exits the route detection area 502 from the exit detection area 506 on the basis of the positioning information acquired by the positioning unit 303. When the vehicle 10 does not exit from the exit detection area 506, the process by the determination unit 304 proceeds to step S1304. By contrast, when the vehicle 10 exits from the exit detection area 506, the process by the determination unit 304 proceeds to step S807.

In step S1304, the imaging control unit 306 controls the imaging unit 305 to capture an image of the imaging target, and the process returns to step S1301.

By the process of FIG. 13, the in-vehicle device 100 can stop or disable the imaging of the imaging target when the movement direction of the vehicle 10 at the time of imaging is different from the predetermined movement direction. The reason why the determination is performed in step S1301 as to whether the vehicle is moving in the predetermined movement direction is that it is preferable to check the movement direction while an image is being captured as the vehicle moves, taking into account, for example, construction work or an accident on the driving route, or a case where the vehicle moves to a branch road due to, for example, a driving error.

As described, according to the embodiments of the present disclosure, an imaging operation is started automatically and finished automatically in the imaging system 1 in which the camera 11 mounted on the vehicle 10 images an object to be imaged while the vehicle 10 travels on a road in an imaging area.

Further, since the imaging system 1 controls the start and end of imaging, a user does not have to control imaging. Accordingly, an image of the imaging target can be captured efficiently even with only a driver in the vehicle 10. Thus, the imaging system 1 according to the present embodiment in which the camera 11 mounted on the vehicle 10 captures an image of an imaging target such as a road surface while the vehicle 10 moves on the road reduces the cost of the operation of capturing the image of the imaging target.

The functionality of the elements of the described embodiments can be implemented using circuitry or processing circuitry which includes general purpose processors, special purpose processors, integrated circuits, application-specific integrated circuits (ASICs), digital signal processors (DSPs), field-programmable gate arrays (FPGAs), conventional circuitry and/or combinations thereof which are configured or programmed to perform the disclosed functionality.

The group of apparatuses or devices described in the embodiments of the present disclosure is one of multiple computing environments to implement the embodiments disclosed in the present disclosure. In some embodiments of the present disclosure, information processing apparatus 110 includes multiple computing devices, such as a server cluster. The multiple computing devices communicate with one another through any type of communication link including, for example, a network or a shared memory, and perform the processes described in the present disclosure.

Further, the components of the information processing apparatus 110 may be integrated into one apparatus or may be divided into multiple apparatuses. Furthermore, at least a part of the functional configurations of the in-vehicle device 100 and the information processing apparatus 110 may be executed by using, for example, an external cloud service.

### Aspects

Aspects of the present disclosure relate to an imaging system, an imaging method, and a program.

### Aspect 1

According to Aspect 1, an imaging system captures an image of an object to be imaged while a vehicle provided with a camera moves on a road in an imaging area.

The imaging system includes a determination unit configured to determine an approach route along which the vehicle enters the imaging area and an exit route along which the vehicle exits the imaging area on the basis of positioning information of the vehicle.

The imaging system includes an imaging control unit configured to control imaging of the object to be imaged by the camera on the basis of the approach route and the exit route.

### Aspect 2

According to Aspect 2, in the imaging system of the Aspect 1, the imaging control unit starts the imaging of the object to be imaged by the camera in a case that the vehicle enters the imaging area from an entry detection area that is determined in advance.

### Aspect 3

According to Aspect 3, in the imaging system of the Aspect 2, the entry detection area is an area within a range of a first distance from a start point of the road in the imaging area.

### Aspect 4

According to Aspect 4, in the imaging system of any one of the Aspects 1 to 3, the imaging control unit finishes the imaging of the object to be imaged by the camera in a case that the vehicle exits the imaging area from an exit detection area that is determined in advance.

### Aspect 5

According to Aspect 5, in the imaging system of the Aspect 4, the exit detection area is an area within a range of a second distance from an endpoint of the road in the imaging area.

### Aspect 6

According to Aspect 6, in the imaging system of any one of the Aspects 1 to 5, the imaging control unit stops or disables the imaging of the object to be imaged by the camera in a case that the vehicle exits the imaging area from an area other than the exit detection area.

### Aspect 7

According to Aspect 7, in the imaging system of any one of the Aspects 1 to 6, the imaging control unit captures a plurality of images in a case that the vehicle moves in a predetermined movement direction on the road in the imaging area and connects the plurality of images in the predetermined movement direction.

### Aspect 8

According to Aspect 8, in the imaging system of the Aspect 7, the imaging control unit stops or disables the imaging of the object to be imaged by the camera in a case that the vehicle moves in a direction different from the predetermined movement direction.

### Aspect 9

According to Aspect 9, an imaging method is performed by a computer that controls a camera mounted on a vehicle to capture an image of an object to be imaged while the vehicle moves on a road in an imaging area.

The method includes determining an approach route along which the vehicle enters the imaging area and an exit route along which the vehicle exits the imaging area on the basis of positioning information of the vehicle.

The method includes controlling imaging of the object to be imaged by the camera on the basis of the approach route and the exit route.

### Aspect 10

According to Aspect 10, a program causing a computer to perform the imaging method of the Aspect 9.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention.

For example, in the embodiments of the present disclosure, the description given above is of a case where the vehicle 10 is an automobile. Alternatively, the vehicle 10 may be, for example, a train that travels on a railroad. Further, in the embodiments of the present disclosure, the description given above is of a case where the in-vehicle device 100 captures multiple still images of an object to be imaged and connects the multiple still images to obtain an image of the object to be imaged. Alternatively, the in-vehicle device 100 may capture images of the object to be imaged as a video.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. An imaging system for capturing an image of an object to be imaged with a camera provided with a vehicle, the vehicle moving on a road in an imaging area, the imaging system comprising:
a determination unit (304) configured to determine an approach route along which the vehicle enters the imaging area and an exit route along which the vehicle exits the imaging area, based on positioning information of the vehicle; and
an imaging control unit (306) configured to control imaging of the object to be imaged by the camera, based on the approach route and the exit route.

2. The imaging system of claim 1, wherein the imaging control unit (306) is configured to start the imaging of the object to be imaged by the camera in a case that the vehicle enters the imaging area from an entry detection area that is determined in advance.

3. The imaging system of claim 2, wherein the entry detection area is an area within a range of a first distance from a start point of the road in the imaging area.

4. The imaging system of any one of claims 1 to 3, wherein the imaging control unit (306) is configured to finish the imaging of the object to be imaged by the camera in a case that the vehicle exits the imaging area from an exit detection area that is determined in advance.

5. The imaging system of claim 4, wherein the exit detection area is an area within a range of a second distance from an endpoint of the road in the imaging area.

6. The imaging system of claim 4 or 5, wherein the imaging control unit (306) is configured to stop or disable the imaging of the object to be imaged by the camera in a case that the vehicle exits the imaging area from an area other than the exit detection area.

7. The imaging system of any one of claims 1 to 6, wherein the imaging control unit (306) is configured to capture a plurality of images in a case that the vehicle moves in a predetermined movement direction on the road in the imaging area and to connect the plurality of images in the predetermined movement direction.

8. The imaging system of claim 7, wherein the imaging control unit (306) is configured to stop or disable the imaging of the object to be imaged by the camera in a case that the vehicle moves in a direction different from the predetermined movement direction.

9. An imaging method performed by a computer that controls a camera mounted on a vehicle to capture an image of an object to be imaged while the vehicle moves on a road in an imaging area, the method comprising:
determining (S802) an approach route along which the vehicle enters the imaging area and an exit route along which the vehicle exits the imaging area, based on positioning information of the vehicle; and
controlling (S803) imaging of the object to be imaged by the camera, based on the approach route and the exit route.

10. A carrier means carrying computer readable codes which, when executed by a computer, cause the computer to carry out the imaging method of claim 9.
